# EUROPEAN PATENT SPECIFICATION

(11) **EP 4 290 396 B1**
(45) Date of publication and mention of the grant of the patent: **14.05.2025**
(21) Application number: 22177637.0
(22) Date of filing: 07.06.2022
(51) Int. Cl.: G06F 21/40, G06F 21/57, G06F 21/64

(54) **UPDATING SOFTWARE OF AN ELECTRONIC CIRCUIT FOR A VEHICLE**
AKTUALISIEREN VON SOFTWARE EINER ELEKTRONISCHEN SCHALTUNG FÜR EIN FAHRZEUG
MISE À JOUR DE LOGICIEL D'UN CIRCUIT ÉLECTRONIQUE POUR UN VÉHICULE

(43) Date of publication of application: 13.12.2023
(73) Proprietor: Valeo Internal Automotive Software Egypt, a limited liability company, Giza, Cairo (EG)
(72) Inventor: DAWOOD, Mena, Giza, Cairo (EG); MAHDY, Alaa, Giza, Cairo (EG)
(74) Representative: Hofstetter, Schurack & Partner

(56) References cited:
- WO-A1-2021/014064
- US-A1- 2007 150 596
- US-A1- 2021 365 558
- US-A1- 2022 147 337

## Description

The present invention is directed to an electronic circuit for a vehicle, to an electronic control unit for a vehicle and to a method for operating an electronic circuit of a vehicle. Electronic circuits in vehicles, in particular motor vehicles, may for example be contained in electronic control units, ECUs, of the vehicle and may contain a processing unit, such as a central processing unit, CPU, to execute a particular software program stored on a memory device of the vehicle or the electronic circuit.

In order to fix software bugs or to introduce improvements in the software, the software stored in the memory device may have to be updated. Such software updates may for example be carried out in a wireless manner by means of an over-the-air, OTA, update. Also for other reasons, the software may be replaced or a new software may be stored. In this context, it is desirable to verify the corresponding data, in particular the data integrity of the corresponding data, transmitted from a server computer to the vehicle via a corresponding communication network.

A blockchain may be considered as a data structure comprising a list of records, which are also denoted as blocks or data blocks, that are linked together using cryptographic methods, in particular cryptographic hashes. For example, each block may contain a cryptographic hash of its preceding block to link those two blocks. In this iterative manner, the integrity of the preceding block may be confirmed step-by-step until an initial or genesis block of the blockchain is reached.

For the verification, consensus algorithms, for example a proof-of-work algorithm as introduced by C. Dwork and M. Naor. "Pricing via Processing or Combatting Junk Mail", Proceedings of the 12th Annual International Cryptology Conference on Advances in Cryptology, pages 139-147, 1993, may be used. Further relevant prior art are patent documents WO2021/014064 and US2022/147337.

It is an objective of the present invention, to provide a possibility for storing or updating software on an electronic circuit of a vehicle, which improves the data integrity of data transmitted from an external server computer to the electronic circuit to provide the software or software update.

The invention is based on the idea to receive a data block from an external server computer by the electronic circuit and to request the verification of the data block at a plurality of external computing nodes. Depending on the result of the verification, a software program is stored, which depends on the verified data block, and a switch request is transmitted to a processing circuit of the electronic circuit to execute the stored software program.

According to an aspect of the invention, an electronic circuit for a vehicle, for example a motor vehicle, is provided. The electronic circuit comprises at least one memory device, which stores a first software program and the electronic circuit comprises a processing circuit, which is configured to read the at least one memory device and to execute the first software program. The at least one memory device also stores a data structure, which comprises one or more linked records. The electronic circuit comprises a network interface for connecting the electronic circuit to a communication network. The electronic circuit comprises at least one control circuit, which is configured to receive a data block from an external server computer via the communication network and, in particular, via the network interface. The at least one control circuit is configured to transmit a respective verification request to verify the data block to each of a plurality of external computing nodes via the communication network and, in particular, via the network interface. The at least one control circuit is configured to receive respective verification responses from each of at least a fraction of the plurality of external computing nodes via the communication network and, in particular, via the network interface, for example in response to the transmission of the respective verification requests.

The at least one control circuit is configured to update the data structure depending on the received verification responses, wherein updating the data structure is carried out by attaching a further record to the data structure, the further record comprising the data block. The at least one control circuit is configured to store a second software program to the at least one memory device depending on the updated data structure, if, for example if and only if, the data block corresponds to a final data block. The at least one control circuit is configured to transmit a switch request to the processing circuit after storing the second software program to the at least one memory device. The processing circuit is configured to read the at least one memory device and execute the second software program in response to the switch request.

The processing circuit may for example execute the first software program prior to receiving the switch request, for example only until the switch request is received. For example, the second software program may correspond to an updated version of the first software program. The second software program may be transmitted via the communication network from the external server computer to the electronic circuit in terms of a plurality of data blocks including the data block described above. In particular, the functionality and features of the electronic circuit described above with respect to the data block, in particular receiving the data block, transmitting the verification requests, receiving the verification responses and updating the data structure, may be carried out analogously for all further data blocks of the plurality of data blocks representing the second software program as well.

One of the plurality of data blocks corresponds to the final data block. The information that it is the final data block is for example stored in the final data block itself. Therefore, the at least one control circuit may determine whether the data block corresponds to the final data block and, if this is the case, determine that the updated data structure is a final version of the data structure, which corresponds to the second software program. If it is found that the data block is not the final data block, said steps may be carried out repeatedly for all of the further data blocks of the plurality of data blocks until the final data block is received and verified and the final version of the data structure is achieved accordingly.

The second software program may be identical to the final version of the data structure or the at least one control circuit may be configured to generate the second software program depending on the final version of the updated data structure and store it accordingly to the at least one memory device.

The plurality of external computing nodes may for example correspond to a plurality of further vehicles or, more specifically, to respective further electronic circuits of the plurality of further vehicles. Each of the further electronic circuits of the plurality of further vehicles may be implemented in the same way as described for the electronic circuit according to the invention.

The verification requests transmitted to the plurality of external computing nodes may for example comprise the data block itself. Consequently, each of the plurality of external computing nodes is able to carry out a verification algorithm to determine whether the data block is valid or not. The result of this verification algorithm, which may also be denoted as a corresponding vote of the external computing node, may be positive or negative and, in some implementations, also may comprise a weighting factor depending for example on a confidence level of the respective external computing node or other properties of the respective external computing node.

In particular, the verification responses comprise the result of the verification algorithm carried out by the respective external computing node or, in other words, the respective vote of the respective external computing node.

The at least one control circuit may determine whether a predefined verification condition is fulfilled by all of the received verification responses. The verification condition may for example be fulfilled, if a certain number of positive votes is receive, wherein the different weights of the external computing nodes may be considered when counting the positive votes, if applicable

If the verification condition is fulfilled, the data block may be considered as verified. Consequently, if the verification condition is fulfilled, for example if and only if the verification is fulfilled, the data structure is updated as described above. On the other hand, if the verification condition is not fulfilled, the at least one control circuit may discard the data block and not attach it as a further record to the data structure.

By means of the electronic circuit according to the invention, the second software program may be received via the communication network, which may for example be a wireless or partly wireless communication network, in a way, which ensures a high level of data integrity of the transmitted data. This is achieved by implementing the described verification process involving the plurality of external computing nodes.

In particular, the concept of the blockchain technology or of a distributed ledger technology may be exploited on the level of the electronic circuit to ensure the high level of data integrity. The algorithms and methods for data verification that may be used by the at least one control circuit and the plurality of external computing nodes may per se be known for example from other applications of the blockchain technology. For example, the at least one control circuit and the external computing nodes may exchange and generate the verification requests and verification responses according to a known consensus algorithm such as for example a proof-of-work, POW, algorithm.

The invention is, however, not exhausted by using the blockchain technology. Rather, by combining the distributed verification process with the subsequent generation of the switch signal and execution of the second software program in response to that, a secure transition from the first to the second software program is achieved.

Furthermore, in the electronic circuit according to the invention, the at least one control circuit and its functionality are separated from the processing circuit, which may for example be a central processing circuit, CPU, of the electronic circuit. Consequently, an increased processing load of the processing circuit due to receiving and verifying the data corresponding to the second software program is avoided. In consequence, the processing circuit may use its full capabilities to execute the first software program while the second software program is being received from the external server computer and verified accordingly.

According to several implementations, the at least one control circuit comprises a hardwired configuration, which encodes a functionality of the at least one control circuit to transmit the verification requests and/or to receive the verification responses.

In other words, the functionality to transmit the verification requests and/or to receive the verification responses is implemented solely in hardware in such implementations.

By implementing said functionality by means of the hardwired configuration rather than by means of software of the at least one control circuit or the processing circuit, the robustness of the verification process may be significantly increased. Furthermore, the effort for programming software when developing a new generation or new version of the electronic circuit may be reduced. Therein, it may in particular be exploited that known standard algorithms for distributed verification of data blocks as for example in the blockchain technology may be used generically.

According to several implementations, the hardwired configuration or a further hardwired configuration of the at least one control circuit encodes a functionality to update the data structure and/or to determine whether the data block corresponds to the final data block.

In this way, the robustness of the update process is further improved.

According to several implementations, the at least one control circuit comprises a data block verification unit, which is configured to transmit the verification requests and to receive the verification responses.

In some implementations, the data block verification circuit may also be configured to update the data structure depending on the received verification responses and/or to store the second software program to the at least one memory device.

For example, the data block verification circuit may comprise the hardwired configuration and/or the further hardwired configuration.

According to several implementations, the at least one control circuit comprises a graphics processing circuit, GPU, or a co-processor or a field-programmable gate array, FPGA.

In particular, the GPU, co-processor or FPGA may contain the data block verification circuit and/or the hardwired configuration and/or the further hardwired configuration.

According to several implementations, the data structure corresponds to a blockchain data structure and an initial record of the one or more linked records corresponds to a genesis data block of the blockchain data structure.

For example, the genesis data block may additionally be stored separately from the data structure, for example in a secured storage location of the electronic circuit. In particular, the genesis data block may be stored previously to the electronic circuit in the secured storage location, for example when manufacturing or delivering the vehicle.

For example, each record of the data structure may have an associated hash value, which results from applying a predefined hash function to the respective record. Furthermore, each record may comprise the respective hash of the preceding record in its header. Consequently, the subsequent records may be linked by means of their hash values.

According to several implementations, the at least one control circuit is configured to generate the verification requests and transmit the verification requests according to a predefined consensus algorithm, in particular according to a proof-of-work algorithm.

Such consensus algorithms as the proof-of-work algorithm are known per se in the context of blockchain technology.

Analogously, the plurality of external computing nodes may generate and transmit the verification responses according to the same consensus algorithm.

According to several implementations, the network interface is designed as a network interface for wireless data communication.

In other words, the communication network is a wireless communication network or radio communication network. In such implementations, the invention is particularly beneficial since data transmission via wireless communication networks may be particularly prone to tampering or attacks.

According to several implementations, the at least one memory device comprises a non-volatile memory, which stores the first software program.

For example, the at least one control circuit may store the second software program also to the non-volatile memory.

For example, the at least one memory device may comprise a further memory storing the data structure and, in particular, the updated data structure. The non-volatile memory and the further memory may for example be physically separated from each other.

According to several implementations, the electronic circuit comprises a microcontroller or a system-on-a-chip, SoC, which contains the processing circuit and the at least one control circuit.

In some implementations, the microcontroller or SoC may contain further components of the electronic circuit, such as the at least one memory device, the non-volatile memory, the further memory, and/or the network interface or the microcontroller or SoC may contain the whole electronic circuit.

According to several implementations, the at least one control circuit is configured to transmit a backup request to the processing circuit after storing the second software program and the processing circuit is configured to store a backup of the first software program to the at least one memory device in response to the backup request.

According to several implementations, the at least one control circuit is configured to receive a further data block and a further verification request to verify the further data block from one of the plurality of external computing nodes via the communication network. The at least one control circuit is configured to verify the further block data in response to the further verification request according to the consensus algorithm and to transmit a further verification response to the one of the plurality of external computing nodes depending on the result of the verification of the further data block.

In such implementations, the electronic circuit also acts as an instance for verification itself. In other words, the role of the external computing nodes may be described as the role of miners in the context of blockchain technology. In respective implementations, also the electronic circuit itself acts as a miner.

For example, said functionalities of receiving the further data block and the further verification request, verifying the further data block and transmitting the further verification response may for example be encoded by the hardwired configuration as well.

The processing circuit and the at least one control circuit of the electronic circuit may also be denotes as respective computing units. A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, an electronic control unit, ECU, for a vehicle is provided, wherein the ECU comprises the electronic control circuit according to an implementation of the invention.

According to a further aspect of the invention, a method for operating an electronic circuit of a vehicle is provided. The method comprises storing a first software program and a data structure comprising one or more linked records to at least one memory device of the electronic circuit and executing the first software program by a processing circuit of the electronic circuit. The method comprises receiving a data block from an external server computer by at least one control circuit of the electronic circuit via a communication network. The method comprises transmitting a respective verification request to verify the data block to each of a plurality of external computing nodes, in particular by the at least one control circuit via the communication network and to receive respective verification responses from each of at least a fraction of the plurality of external computing nodes via the communication network by the at least one control circuit.

The method comprises updating the data structure depending on the received verification responses by attaching a further record, which comprises the data block, to the data structure by the at least one control circuit, storing a second software program to the at least one memory device depending on the updated data structure by the at least one control circuit, if the data block corresponds to a final data block, and transmitting a switch request by the at least one control circuit to the processing circuit after storing the second software program. The method comprises executing the second software program in response to the switch request by the processing circuit.

According to several implementations, the first software program is executed by the processing circuit while the data packet is received by the at least one control circuit.

Further implementations of the method according to the invention follow directly from the various embodiments of the electronic circuit according to the invention and vice versa. In particular, individual features and corresponding explanations as well as advantages relating to the various implementations of the electronic circuit according to the invention can be transferred analogously to corresponding implementations of the method according to the invention. In particular, the electronic circuit according to the invention is designed or programmed to carry out the method according to the invention. In particular, the electronic circuit according to the invention carries out the method according to the invention.

If it is mentioned in the present disclosure that a component of the electronic circuit according to the invention, in particular the processing unit or the at least one control circuit of the electronic circuit, is adapted, configured or designed et cetera, to perform or realize a certain function, to achieve a certain effect or to serve a certain purpose, this can be understood such that the component, beyond being usable or suitable for this function, effect or purpose in principle or theoretically, is concretely and actually capable of executing or realizing the function, achieving the effect or serving the purpose by a corresponding adaptation, programming, physical design and so on.

For use cases or use situations which may arise in the method and which are not explicitly described here, it may be provided that, in accordance with the method, an error message and/or a prompt for user feedback is output and/or a default setting and/or a predetermined initial state is set.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures:
- Fig. 1: shows schematically a vehicle with an exemplary implementation of an electronic circuit according to the invention;
- Fig. 2: shows schematically a block diagram of a further exemplary implementation of an electronic circuit according to the invention; and
- Fig. 3: shows a schematic flow diagram of an exemplary implementation of a method according to the invention.

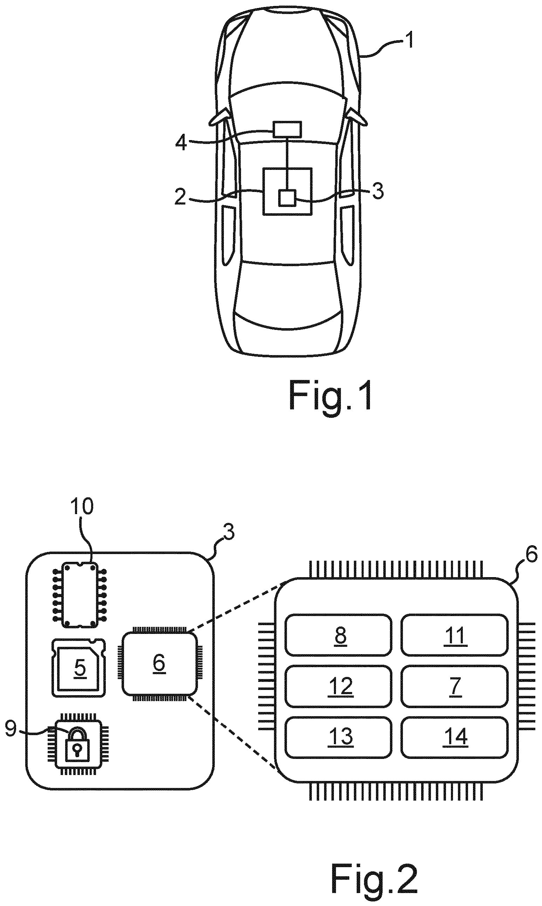

Fig. 1 shows schematically a vehicle 1, for example a passenger car, which comprises an exemplary implementation of an electronic circuit 3 according to the invention. For example, the electronic circuit 3 may be part of an electronic control unit, ECU, 2 of the vehicle 1.

The electronic circuit 3 may for example be implemented as a microcontroller or an SoC of the ECU 2. Depending on the actual implementation, the ECU 2 and, in consequence, the electronic circuit 3, may be used for different purposes, for example as a part of an electronic vehicle guidance system, such as an advanced driver assistance system, ADAS, or an autonomous driving system, ADS, and/or in order to control a sensor device 4, an actuator or a motor of the vehicle 1 et cetera.

Fig. 2 shows schematically a block diagram of an exemplary implementation of the electronic circuit 3 for use in a vehicle as described with respect to Fig. 1.

The electronic circuit 3 comprises a network interface 7 for connecting the electronic circuit 3 to a communication network, for example a wireless communication network. Therein, the electronic circuit 3 may for example access the communication network directly by means of the network interface 7 or via an additional device (not shown) of the vehicle 1. The network interface 7 may then for example communicate with the additional device in a wired or wireless manner.

The electronic circuit 3 comprises a memory 10, which is for example a non-volatile memory and which stores a first software program, and a further memory 14, which stores a data structure, in particular a blockchain data structure, comprising one or more linked records. An initial record of the one or more linked records corresponds to a genesis data block of the blockchain data structure. The genesis may for example also be stored in a secured storage area 11 of the electronic circuit 3.

The electronic circuit 3 further comprises a processing circuit 5, which may for example be a CPU of the electronic circuit 3. The processing circuit 5 is configured to execute the first software program upon reading the memory 10.

The electronic circuit 3 comprises at least one control circuit 8, 13, which is configured to receive a data block from an external server computer (not shown) via the communication network and the network interface 7. The at least one control circuit 8, 13 is configured to transmit a respective verification request according to a predefined consensus algorithm, for example a proof-of-work, POW, algorithm, to verify the data block to each of a plurality of external computing nodes (not shown), such as further vehicles, via the communication network and the network interface 7. In response to the verification requests, the at least one control circuit 8, 13 may receive respective verification responses from the external computing nodes or a fraction of them via the communication network and the network interface 7.

The at least one control circuit 8, 13 may contain for example a data block verification circuit 8, which may also be denoted as data block verification accelerator, for implementing the respective parts of the consensus algorithm, in particular for transmitting the verification requests and receiving the verification responses. This functionality may for example be hardwired in the data block verification circuit 8.

The at least one control circuit 8, 13 may also comprise an OTA sequence control unit 13, which is configured to coordinate and control the receiving of the data block. Therein OTA stands for over-the-air.

The at least one control circuit 8, 13 is configured to update the data structure depending on the received verification responses, in particular if the received verification responses indicate that a predefined verification condition is fulfilled. In order to update the data structure, the at least one control circuit 8, 13 attaches a further record to the data structure, wherein the further data structure comprises the data block or consists of the data block.

In case the data block corresponds to a final data block, the at least one control circuit 8, 13 stores a second software program to the memory device 10 depending on the updated data structure and transmits a switch request to the processing circuit 5 afterwards. Then, the processing circuit 5 may execute the second software program in response to the switch request. The switch request may for example be transmitted via an interfacing unit 12 of the electronic circuit 3.

For example, the at least one control circuit 8, 13 may be part of a hardware component 6 of the electronic circuit 3. The hardware component 6 may also comprise the interfacing unit 12, the secured storage area 11, the network interface 7 and/or the further memory 14. The hardware component 6 may for example be implemented as a hardware peripheral of the microcontroller or SoC in respective implementations, for example as a GPU, a co-processor or an FPGA.

Furthermore, in some implementations, the electronic circuit 3 may also comprise a hardware security module 9.

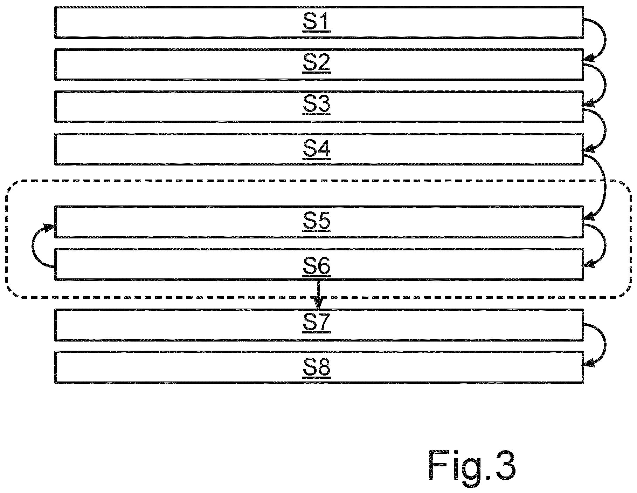

Fig. 3 shows a flow diagram of an exemplary implementation of a method according to the invention.

In step S1 of the method, the genesis block may be stored to the electronic circuit 3, for example the secured storage area 11. This may for example be done by a vehicle manufacturer of the vehicle 1. In step S2, a supplier of the second software program may initiate an update transaction by pushing a corresponding request to the external server computer and the supplier may share a file representing the second software program, for example a hex-file, to the external server computer in step S3. In step S4, the file may be signed by the external server computer.

Then, for each of a plurality of data blocks, steps S5 and S6 are carried out. In the respective step S5, the external server computer provides the corresponding data block to the vehicle 1 and in the respective step S6, the at least one control circuit 8, 13 transmits the verification request and receives the verification responses and updates the data structure accordingly as described. If the final data block has been received, the at least one control circuit 8, 13 stores the second software program in the corresponding step S6 as described.

In step S7, the at least one control circuit 8, 13 may transmit a backup request to the processing circuit 5, for example via the interfacing unit 12. The processing circuit 5 may then store a backup of the first software program to the memory 10. In step S8, the at least one control circuit 8, 13 transmits the switch request and the processing circuit 5 may then execute the second software program.

As described, in particular with respect to the figures, the invention allows in several implementations to create a standardized method for flashing software to an electronic circuit, such as a microcontroller or an SoC, over-the-air using a blockchain platform.

In several implementations, a particularly high performance may for example be achieved by using hardwired configurations.

## Claims

1. Electronic circuit (3) for a vehicle (1), wherein
- the electronic circuit (3) comprises at least one memory device (10, 14), which stores a first software program and a data structure comprising one or more linked records, and a processing circuit (5), which is configured to execute the first software program;
- the electronic circuit (3) comprises a network interface (7) for connecting the electronic circuit (3) to a communication network and at least one control circuit (8, 13), which is configured to receive a data block from an external server computer via the communication network;
- the at least one control circuit (8, 13) is configured to transmit a respective verification request to verify the data block to each of a plurality of external computing nodes via the communication network and to receive respective verification responses from at least a fraction of the plurality of external computing nodes via the communication network;
- the at least one control circuit (8, 13) is configured to update the data structure depending on the received verification responses by attaching a further record, which comprises the data block, to the data structure;
- the least one control circuit (8, 13) is configured to determine whether the data block corresponds to the final data block and, if this is the case, determine that the updated data structure is a final version of the data structure, which corresponds to a second software program and store the second software program accordingly to the at least one memory device (10,14);
- the at least one control circuit (8, 13) is configured to transmit a switch request to the processing circuit (5) after storing the second software program; and
- the processing circuit (5) is configured to execute the second software program in response to the switch request.

2. Electronic circuit (3) according to claim 1, wherein at least one control circuit (8, 13) comprises a hardwired configuration, which encodes a functionality to transmit the verification requests and/or to receive the verification responses and/or to update the data structure.

3. Electronic circuit (3) according to one of the preceding claims, wherein
- the at least one control circuit (8, 13) is configured to transmit a backup request to the processing circuit (5) after storing the second software program; and
- the processing circuit (5) is configured to store a backup of the first software program to the at least one memory device (10, 14) in response to the backup request.

4. Electronic circuit (3) according to one of the preceding claims, wherein the data structure corresponds to a blockchain data structure and an initial record of the one or more linked records corresponds to a genesis data block of the blockchain data structure.

5. Electronic circuit (3) according to one of the preceding claims, wherein the processing circuit (5) is implemented as a central processing unit, CPU.

6. Electronic circuit (3) according to one of the preceding claims, wherein the least one control circuit (8, 13) comprises a data block verification circuit (8), which is configured to transmit the verification requests and to receive the verification responses.

7. Electronic circuit (3) according to one of the preceding claims, wherein the least one control circuit (8, 13) comprises a graphics processing unit, GPU, or a co-processor or a field-programmable gate array, FPGA.

8. Electronic circuit (3) according to one of the preceding claims, wherein the network interface (7) is designed as a network interface (7) for wireless data communication.

9. Electronic circuit (3) according to one of the preceding claims, wherein the at least one memory device (10, 14) comprises a non-volatile memory (10), which stores the first software program.

10. Electronic circuit (3) according to one of the preceding claims, wherein the electronic circuit (3) comprises
- a microcontroller, which contains the processing circuit (5) and the at least one control circuit (8, 13); or
- a system-on-a-chip, SoC, which contains the processing circuit (5) and the at least one control circuit (8, 13).

11. Electronic circuit (3) according to one of the preceding claims, wherein the at least one control circuit (8, 13) is configured to transmit the verification requests according to a predefined consensus algorithm, in particular according to a proof-of-work algorithm.

12. Electronic circuit (3) according to claim 11, wherein the at least one control circuit (8, 13) is configured to
- receive a further data block and a further verification request to verify the further data block from one of the plurality of external computing nodes via the communication network;
- verify the further data block in response to the further verification request according to the consensus algorithm; and
- transmit a further verification response to the one of the plurality of external computing nodes depending on a result of the verification of the further data block.

13. Electronic control unit, ECU, (2) for a vehicle (1), the ECU (2) comprising an electronic circuit (3) according to one of the preceding claims.

14. Method for operating an electronic circuit (3) of a vehicle (1), the method comprising
- storing a first software program and a data structure comprising one or more linked records to at least one memory device (10, 14) of the electronic circuit (3);
- executing the first software program by a processing circuit (5) of the electronic circuit (3);
- receiving a data block from an external server computer by at least one control circuit (8, 13) of the electronic circuit (3) via a communication network;
- transmitting a respective verification request to verify the data block to each of a plurality of external computing nodes via the communication network and to receive respective verification responses from at least a fraction of the plurality of external computing nodes via the communication network by the at least one control circuit (8, 13);
- updating the data structure depending on the received verification responses by attaching a further record, which comprises the data block, to the data structure by the at least one control circuit (8, 13);
- determining, by the at least one control circuit (8,13), whether the data block corresponds to the final data block and, if this is the case, determine that the updated data structure is a final version of the data structure, which corresponds to a second software program and storing the second software program accordingly to the at least one memory device (10,14);
- transmitting a switch request by the at least one control circuit (8, 13) to the processing circuit (5) after storing the second software program; and
- executing the second software program in response to the switch request by the processing circuit (5).

15. Method according to claim 14, wherein the plurality of external computing nodes is given by a plurality of respective further electronic circuits of a plurality of further vehicles.

## Patentansprüche

1. Elektronische Schaltung (3) für ein Fahrzeug (1), wobei
- die elektronische Schaltung (3) mindestens eine Speichervorrichtung (10, 14), die ein erstes Software-Programm und eine Datenstruktur mit einem oder mehreren verknüpften Datensätzen speichert, und eine Verarbeitungsschaltung (5), die dazu eingerichtet ist, das erste Software-Programm auszuführen, umfasst;
- die elektronische Schaltung (3) eine Netzwerkschnittstelle (7) zum Verbinden der elektronischen Schaltung (3) mit einem Kommunikationsnetzwerk und mindestens eine Steuerschaltung (8, 13) umfasst, die dazu eingerichtet ist, einen Datenblock von einem externen Servercomputer über das Kommunikationsnetzwerk zu empfangen;
- die mindestens eine Steuerschaltung (8, 13) dazu eingerichtet ist, eine jeweilige Verifizierungsanforderung, um den Datenblock zu verifizieren, zu jedem von einer Vielzahl von externen Rechenknoten über das Kommunikationsnetzwerk zu senden und jeweilige Verifizierungsantworten von zumindest einem Bruchteil der Vielzahl von externen Rechenknoten über das Kommunikationsnetzwerk zu empfangen;
- die mindestens eine Steuerschaltung (8, 13) dazu eingerichtet ist, die Datenstruktur in Abhängigkeit von den empfangenen Verifizierungsantworten durch Anhängen eines weiteren Datensatzes, der den Datenblock umfasst, an die Datenstruktur zu aktualisieren;
- die mindestens eine Steuerschaltung (8, 13) dazu eingerichtet ist zu bestimmen, ob der Datenblock dem Enddatenblock entspricht, und wenn dies der Fall ist, zu bestimmen, dass die aktualisierte Datenstruktur eine Endversion der Datenstruktur ist, die einem zweiten Software-Programm entspricht, und das zweite Software-Programm dementsprechend in der mindestens einen Speichervorrichtung (10, 14) zu speichern;
- die mindestens eine Steuerschaltung (8, 13) dazu eingerichtet ist, eine Umschaltanforderung zur Verarbeitungsschaltung (5) nach dem Speichern des zweiten Software-Programms zu senden; und
- die Verarbeitungsschaltung (5) dazu eingerichtet ist, das zweite Software-Programm in Reaktion auf die Umschaltanforderung auszuführen.

2. Elektronische Schaltung (3) nach Anspruch 1, wobei mindestens eine Steuerschaltung (8, 13) eine festverdrahtete Konfiguration umfasst, die eine Funktionalität codiert, um die Verifizierungsanforderungen zu senden und/oder die Verifizierungsantworten zu empfangen und/oder die Datenstruktur zu aktualisieren.

3. Elektronische Schaltung (3) nach einem der vorangehenden Ansprüche, wobei
- die mindestens eine Steuerschaltung (8, 13) dazu eingerichtet ist, eine Sicherungsanforderung zur Verarbeitungsschaltung (5) nach dem Speichern des zweiten Software-Programms zu senden; und
- die Verarbeitungsschaltung (5) dazu eingerichtet ist, eine Sicherung des ersten Software-Programms in der mindestens einen Speichervorrichtung (10, 14) in Reaktion auf die Sicherungsanforderung zu speichern.

4. Elektronische Schaltung (3) nach einem der vorangehenden Ansprüche, wobei die Datenstruktur einer Blockchain-Datenstruktur entspricht und ein anfänglicher Datensatz des einen oder der mehreren verknüpften Datensätze einem Genesis-Datenblock der Blockchain-Datenstruktur entspricht.

5. Elektronische Schaltung (3) nach einem der vorangehenden Ansprüche, wobei die Verarbeitungsschaltung (5) als Zentraleinheit, CPU, implementiert wird.

6. Elektronische Schaltung (3) nach einem der vorangehenden Ansprüche, wobei die mindestens eine Steuerschaltung (8, 13) eine Datenblockverifizierungsschaltung (8) umfasst, die dazu eingerichtet ist, die Verifizierungsanforderungen zu senden und die Verifizierungsantworten zu empfangen.

7. Elektronische Schaltung (3) nach einem der vorangehenden Ansprüche, wobei die mindestens eine Steuerschaltung (8, 13) eine Graphikverarbeitungseinheit, GPU, oder einen Coprozessor oder ein anwenderprogrammierbares Gate-Array, FPGA, umfasst.

8. Elektronische Schaltung (3) nach einem der vorangehenden Ansprüche, wobei die Netzwerkschnittstelle (7) als Netzwerkschnittstelle (7) zur drahtlosen Datenkommunikation ausgelegt ist.

9. Elektronische Schaltung (3) nach einem der vorangehenden Ansprüche, wobei die mindestens eine Speichervorrichtung (10, 14) einen nichtflüchtigen Speicher (10) umfasst, der das erste Software-Programm speichert.

10. Elektronische Schaltung (3) nach einem der vorangehenden Ansprüche, wobei die elektronische Schaltung (3) umfasst
- einen Mikrocontroller, der die Verarbeitungsschaltung (5) und die mindestens eine Steuerschaltung (8, 13) enthält; oder
- ein Ein-Chip-System, SoC, das die Verarbeitungsschaltung (5) und die mindestens eine Steuerschaltung (8, 13) enthält.

11. Elektronische Schaltung (3) nach einem der vorangehenden Ansprüche, wobei die mindestens eine Steuerschaltung (8, 13) dazu eingerichtet ist, die Verifizierungsanforderungen gemäß einem vordefinierten Konsensalgorithmus, insbesondere gemäß einem Proof-of-Work-Algorithmus, zu senden.

12. Elektronische Schaltung (3) nach Anspruch 11, wobei die mindestens eine Steuerschaltung (8, 13) dazu eingerichtet ist,
- einen weiteren Datenblock und eine weitere Verifizierungsanforderung, um den weiteren Datenblock zu verifizieren, von einem der Vielzahl von externen Rechenknoten über das Kommunikationsnetzwerk zu empfangen;
- den weiteren Datenblock in Reaktion auf die weitere Verifizierungsanforderung gemäß dem Konsensalgorithmus zu verifizieren; und
- eine weitere Verifizierungsantwort zu dem einen der Vielzahl von externen Rechenknoten in Abhängigkeit von einem Ergebnis der Verifizierung des weiteren Datenblocks zu senden.

13. Steuergerät, ECU, (2) für ein Fahrzeug (1), wobei das ECU (2) eine elektronische Schaltung (3) nach einem der vorangehenden Ansprüche umfasst.

14. Verfahren zum Betreiben einer elektronischen Schaltung (3) eines Fahrzeugs (1), wobei das Verfahren umfasst
- Speichern eines ersten Software-Programms und einer Datenstruktur mit einem oder mehreren verknüpften Datensätzen in mindestens einer Speichervorrichtung (10, 14) der elektronischen Schaltung (3);
- Ausführen des ersten Software-Programms durch eine Verarbeitungsschaltung (5) der elektronischen Schaltung (3);
- Empfangen eines Datenblocks von einem externen Servercomputer durch mindestens eine Steuerschaltung (8, 13) der elektronischen Schaltung (3) über ein Kommunikationsnetzwerk;
- Senden einer jeweiligen Verifizierungsanforderung, um den Datenblock zu verifizieren, zu jedem einer Vielzahl von externen Rechenknoten über das Kommunikationsnetzwerk, und Empfangen von jeweiligen Verifizierungsantworten von zumindest einem Bruchteil der Vielzahl von externen Rechenknoten über das Kommunikationsnetzwerk durch die mindestens eine Steuerschaltung (8, 13);
- Aktualisieren der Datenstruktur in Abhängigkeit von den empfangenen Verifizierungsantworten durch Anhängen eines weiteren Datensatzes, der den Datenblock umfasst, an die Datenstruktur durch die mindestens eine Steuerschaltung (8, 13);
- Bestimmen, ob der Datenblock dem Enddatenblock entspricht, durch die mindestens eine Steuerschaltung (8, 13), und wenn dies der Fall ist, Bestimmen, dass die aktualisierte Datenstruktur eine Endversion der Datenstruktur ist, die einem zweiten Software-Programm entspricht, und dementsprechend Speichern des zweiten Software-Programms in der mindestens einen Speichervorrichtung (10, 14);
- Senden einer Umschaltanforderung durch die mindestens eine Steuerschaltung (8, 13) zur Verarbeitungsschaltung (5) nach dem Speichern des zweiten Software-Programms; und
- Ausführen des zweiten Software-Programms in Reaktion auf die Umschaltanforderung durch die Verarbeitungsschaltung (5).

15. Verfahren nach Anspruch 14, wobei die Vielzahl von externen Rechenknoten durch eine Vielzahl von jeweiligen weiteren elektronischen Schaltungen einer Vielzahl von weiteren Fahrzeugen gegeben ist.

## Revendications

1. Circuit électronique (3) pour un véhicule (1),
- le circuit électronique (3) comportant au moins un dispositif de mémoire (10, 14) qui stocke un premier programme logiciel et une structure de données comportant un ou plusieurs enregistrements liés, et un circuit de traitement (5) qui est configuré pour exécuter le premier programme logiciel ;
- le circuit électronique (3) comportant une interface réseau (7) pour connecter le circuit électronique (3) à un réseau de communication et au moins un circuit de commande (8, 13), qui est configuré pour recevoir un bloc de données provenant d'un ordinateur serveur externe via le réseau de communication ;
- le au moins un circuit de commande (8, 13) étant configuré pour transmettre une demande de vérification respective pour vérifier le bloc de données, à chaque noeud d'une pluralité de noeuds de calcul externes via le réseau de communication et pour recevoir des réponses de vérification respectives provenant d'au moins une fraction de la pluralité de noeuds de calcul externes via le réseau de communication ;
- le au moins un circuit de commande (8, 13) étant configuré pour mettre à jour la structure de données en fonction des réponses de vérification reçues, en joignant un enregistrement supplémentaire, qui comporte le bloc de données, à la structure de données ;
- le au moins circuit de commande (8, 13) étant configuré pour déterminer si le bloc de données correspond au bloc de données final et, si tel est le cas, déterminer que la structure de données mise à jour est une version finale de la structure de données, qui correspond à un second programme logiciel, et stocker le second programme logiciel en conséquence dans le au moins un dispositif de mémoire (10, 14) ;
- le au moins un circuit de commande (8, 13) étant configuré pour transmettre une demande de permutation au circuit de traitement (5) après le stockage du second programme logiciel ; et
- le circuit de traitement (5) étant configuré pour exécuter le second programme logiciel en réponse à la demande de permutation.

2. Circuit électronique (3) selon la revendication 1, dans lequel au moins un circuit de commande (8, 13) comporte une configuration câblée, qui code une fonctionnalité pour transmettre les demandes de vérification et/ou pour recevoir les réponses de vérification et/ou pour mettre à jour la structure de données.

3. Circuit électronique (3) selon l'une des revendications précédentes,
- le au moins un circuit de commande (8, 13) étant configuré pour transmettre une demande de sauvegarde au circuit de traitement (5) après le stockage du second programme logiciel ; et
- le circuit de traitement (5) étant configuré pour stocker une sauvegarde du premier programme logiciel dans le au moins un dispositif de mémoire (10, 14) en réponse à la demande de sauvegarde.

4. Circuit électronique (3) selon l'une des revendications précédentes, dans lequel la structure de données correspond à une structure de données en chaîne de blocs et un enregistrement initial du ou des enregistrements liés correspond à un bloc de données d'origine de la structure de données en chaîne de blocs.

5. Circuit électronique (3) selon l'une des revendications précédentes, dans lequel le circuit de traitement (5) est mis en œuvre sous la forme d'une unité de traitement centrale, CPU.

6. Circuit électronique (3) selon l'une des revendications précédentes, dans lequel le au moins un circuit de commande (8, 13) comporte un circuit de vérification de bloc de données (8) qui est configuré pour transmettre les demandes de vérification et pour recevoir les réponses de vérification.

7. Circuit électronique (3) selon l'une des revendications précédentes, dans lequel le au moins un circuit de commande (8, 13) comporte une unité de traitement graphique, GPU, ou un co-processeur ou un circuit intégré prédiffusé programmable, FPGA.

8. Circuit électronique (3) selon l'une des revendications précédentes, dans lequel l'interface réseau (7) est conçue comme une interface réseau (7) pour la communication de données sans fil.

9. Circuit électronique (3) selon l'une des revendications précédentes, dans lequel le au moins un dispositif de mémoire (10, 14) comporte une mémoire non volatile (10) qui stocke le premier programme logiciel.

10. Circuit électronique (3) selon l'une des revendications précédentes, dans lequel le circuit électronique (3) comporte :
- un microcontrôleur, qui contient le circuit de traitement (5) et le au moins un circuit de commande (8, 13) ; ou
- un système sur puce, SoC, qui contient le circuit de traitement (5) et le au moins un circuit de commande (8, 13).

11. Circuit électronique (3) selon l'une des revendications précédentes, dans lequel le au moins un circuit de commande (8, 13) est configuré pour transmettre les demandes de vérification en fonction d'un algorithme de consensus prédéfini, en particulier en fonction d'un algorithme de preuve de travail.

12. Circuit électronique (3) selon la revendication 11, dans lequel le au moins un circuit de commande (8, 13) est configuré pour :
- recevoir un bloc de données supplémentaire et une demande de vérification supplémentaire pour vérifier le bloc de données supplémentaire provenant d'un nœud de la pluralité de nœuds de calcul externes via le réseau de communication ;
- vérifier le bloc de données supplémentaire en réponse à la demande de vérification supplémentaire en fonction de l'algorithme de consensus ; et
- transmettre une réponse de vérification supplémentaire au nœud de la pluralité de nœuds de calcul externes en fonction d'un résultat de la vérification du bloc de données supplémentaire.

13. Unité de commande électronique, ECU, (2) pour un véhicule (1), l'ECU (2) comportant un circuit électronique (3) selon l'une des revendications précédentes.

14. Procédé pour faire fonctionner un circuit électronique (3) d'un véhicule (1), le procédé comportant :
- stocker un premier programme logiciel et une structure de données comportant un ou plusieurs enregistrements liés dans au moins un dispositif de mémoire (10, 14) du circuit électronique (3) ;
- exécuter le premier programme logiciel par un circuit de traitement (5) du circuit électronique (3) ;
- recevoir un bloc de données d'un ordinateur serveur externe par au moins un circuit de commande (8, 13) du circuit électronique (3) via un réseau de communication ;
- transmettre une demande de vérification respective pour vérifier le bloc de données, à chaque nœud d'une pluralité de nœuds de calcul externes via le réseau de communication et pour recevoir des réponses de vérification respectives provenant d'au moins une fraction de la pluralité de nœuds de calcul externes via le réseau de communication par le au moins un circuit de commande (8, 13) ;
- mettre à jour la structure de données en fonction des réponses de vérification reçues, en joignant un enregistrement supplémentaire, qui comporte le bloc de données, à la structure de données par le au moins un circuit de commande (8, 13) ;
- déterminer, par le au moins un circuit de commande (8, 13), si le bloc de données correspond au bloc de données final et, si tel est le cas, déterminer que la structure de données mise à jour est une version finale de la structure de données, qui correspond à un second programme logiciel et stocker le second programme logiciel en conséquence dans le au moins un dispositif de mémoire (10, 14) ;
- transmettre une demande de permutation par le au moins un circuit de commande (8, 13) au circuit de traitement (5) après le stockage du second programme logiciel ; et
- exécuter le second programme logiciel en réponse à la demande de permutation par le circuit de traitement (5).

15. Procédé selon la revendication 14, dans lequel la pluralité de nœuds de calcul externes est fournie par une pluralité de circuits électroniques supplémentaires respectifs d'une pluralité de véhicules supplémentaires.
